# EUROPEAN PATENT SPECIFICATION

(11) **EP 4 086 599 B1**
(45) Date of publication and mention of the grant of the patent: **20.11.2024**
(21) Application number: 21172548.6
(22) Date of filing: 06.05.2021
(51) Int. Cl.: G01K 7/16

(54) **SENSOR ASSEMBLY FOR A RESISTANCE TEMPERATURE SENSOR ELEMENT AND RESISTANCE TEMPERATURE SENSOR ELEMENT**
SENSORANORDNUNG FÜR EIN WIDERSTANDSTEMPERATURSENSORELEMENT UND WIDERSTANDSTEMPERATURSENSORELEMENT
ENSEMBLE CAPTEUR POUR UN ÉLÉMENT DE CAPTEUR DE TEMPÉRATURE DE RÉSISTANCE ET ÉLÉMENT DE CAPTEUR DE TEMPÉRATURE DE RÉSISTANCE

(43) Date of publication of application: 09.11.2022
(73) Proprietor: TE Conectivity Smart Grid GmbH, 44227 Dortmund (DE)
(72) Inventor: ROESSINGER, Stefan Andreas, 44227 Dortmund (DE); SIRTL, Horst, 44227 Dortmund (DE)
(74) Representative: Grünecker Patent- und Rechtsanwälte PartG mbB

(56) References cited:
- FR-A1- 2 796 718
- US-A1- 2017 153 148

## Description

The invention relates to a sensor assembly for a resistance temperature sensor element and to a resistance temperature sensor element.

Sensor assemblies for resistance temperature sensor elements are known in the art. Examples can be found in US 2017/153148 A1 and FR 2 796 718 A1. These sensor assemblies comprise measuring structures, in particular resistive elements. Such a measuring structure is usually made from platinum. A change in temperature induces a change in the electric resistance of the measuring structure. This electric resistance can be measured and the corresponding temperature of the element can then be calculated. The measuring structure is usually supported by a substrate.

Known sensor assemblies for resistance temperature sensor elements are critical with respect to their structural integrity over their life time. In particular, a large number of temperature changes may reduce the structural integrity of the assembly and lead to failure of the assembly and of the resistance thermometer.

It is therefore the object of the invention to provide a sensor assembly for a resistance temperature sensor element that maintains its structural integrity over a large number of cycles of temperature changes.

For the sensor assembly according to the invention, this object is achieved by a sensor assembly for a resistance temperature sensor element, the sensor assembly comprising a substrate and a measuring structure disposed on the substrate, wherein the substrate comprises at least one first material, the first material being at least one of aluminum oxide, spinel (magnesium aluminate) and yttrium-aluminum-garnet, at least one stabilized second material, the stabilized second material being at least one of stabilized zirconium dioxide and stabilized hafnium dioxide, the stabilized second material being stabilized by containing an oxide of an element having a valence different from four, wherein a coefficient of thermal expansion of the substrate deviates by less than 5 % from a coefficient of thermal expansion of the measuring structure and characterized in that the stabilized second material is stabilized by containing an oxide of an element with valence three or five.

For the resistance temperature sensor element according to the invention, the object is achieved in that the resistance thermometer comprises at least one sensor assembly according to the invention.

Due to the coefficients of thermal expansion of the substrate and the measuring structure, which differ not more than 5% from each other, the coefficients of thermal expansion are regarded as being matched.

This matching is important, since in case of a mismatch of the CTEs, a change in temperature may induce different volume changes in the substrate and in the measuring structure. This results in stress effects on the measuring structure. This can cause a shift in resistance and temperature coefficient of resistance. Further, the measuring structure may undergo geometric changes. One effect can be hysteresis in resistance and temperature coefficient of resistance with temperature cycling. Overall, the bond between the measuring structure and the substrate may be damaged. It is also possible that the measuring structure gets destroyed.

Due to the stabilized second material, the invention allows to achieve a good matching of the coefficients of thermal expansion even across a wide temperature range. This is explained in the following.

The measuring structure is usually made from platinum. However, it is not limited to platinum. Platinum has a CTE of 9.5 ppm/K. It is known that zirconium dioxide has an average CTE of 10.5 ppm/K. With aluminum oxide having a CTE of about 7.8 ppm/K, one may assume that mixing these materials is applicable to reach the CTE of platinum.

However, pure zirconium dioxide has a CTE of 10.3 ppm/K only in some directions of its crystal structure at room temperature. The average CTE of pure zirconium dioxide at room temperature is only about 8.8 ppm/K.

Hence, mixing pure zirconium dioxide with aluminum oxide may not result in a substrate having a CTE that is matched with that of platinum. The aforementioned problem also exists for pure hafnium dioxide.

At temperatures above 1200 °C, pure zirconium dioxide has an average CTE of 10.5 ppm/K, because the material then has an overall tetragonal crystal structure. Above 2400 °C, the crystal structure becomes cubic. However, for measurements below 1200 °C, this is not useful.

The inventive solution overcomes this problem by using stabilized zirconium dioxide or stabilized hafnium dioxide.

To get stabilized materials, pure zirconium dioxide or pure hafnium dioxide is mixed with a stabilizing material. This stabilizing material is preferably an oxide of an element having a valence that differs from the valence of zirconium. The valence of zirconium is 4.

Hence, an element having a valence being 3 or 5 is used for the stabilizing material.

Mixing pure zirconium dioxide with such an oxide will result in a stabilized material having a stabilized cubic and/or tetragonal crystal structure even at room temperature. With this structure, the stabilized material has a homogeneous CTE. The same is also valid for hafnium dioxide.

To summarize, the sensor assembly according to the invention allows for a fine adjusted matching of the coefficients of thermal expansion of the measuring structure and the substrate. Thereby, a reliable sensor assembly is achieved.

The aforementioned adjustment may even exist for a wide applicable temperature range, for example from -200 °C up to temperatures higher than 1200 °C.

In the following, further improvements of the invention are described. The additional improvements may be combined independently of each other, depending on whether a particular advantage of a particular improvement is needed in a specific application.

According to a first advantageous improvement, the second material may be stabilized by a stabilizing material, the stabilizing material being an oxide of at least one of the following elements: yttrium, cerium, tantalum and niobium. However, also other elements may be used. It is also not excluded that a material, which is not an oxide, is used as a stabilizing material. The stabilized second material preferably has a basically tetragonal or cubic crystal structure. Thereby, a stable and homogeneous CTE may be achieved, even over a wide temperature range.

According to another advantageous improvement, the substrate may further comprise an insulating layer between the measuring structure and the remaining substrate. Due to the stabilizing material in the second material, the substrate may be electrically conductive, at least in parts. In particular, the material may have an ion conductivity that cannot be neglected. This ion conductivity may result from the difference in valences that creates voids or excess oxygen. However, an insulating layer between the measuring structure and the remaining substrate may overcome this problem. The insulating layer may preferably predominantly contain at least one of aluminum oxide, spinel (magnesium aluminate), and magnesium titanate. However, the insulating layer may also be made from other materials.

The measuring structure is preferably basically made from platinum, in particular made from pure platinum. A measuring structure made from platinum provides a reliable temperature-dependent resistance measurement. In the alternative, the measuring structure may for example be made from a platinum alloy, nickel, a nickel alloy, iridium or an iridium alloy

According to another advantageous improvement, the substrate is a multilayered substrate made from a plurality of layers, at least one layer predominantly containing the first material and at least one layer predominantly containing the stabilized second material, wherein the at least one layer predominantly containing the first material and the at least one layer predominantly containing the stabilized second material are disposed one over another, and wherein the coefficient of thermal expansion of the plurality of layers deviates by less than 5 % from the coefficient of thermal expansion of the measuring structure.

Preferably, the CTE of the layer predominantly containing the first material is different from the CTE of the layer predominantly containing the stabilized second material, wherein the CTE of the plurality of layers is adjusted by the numbers and/or thicknesses of the layers containing the first and stabilized second material, respectively.

In order to achieve a homogeneous substrate, the layers containing the first material and the stabilized second material are preferably disposed over on another in an alternating manner. A total number of the layers may be between 5 and 25 layers.

In order to increase the accuracy of the matching between the CTEs of the substrate and the measuring structure made from platinum, a sum of thicknesses of the layers containing the stabilized second material is preferably approximately 150% of a sum of the thicknesses of the layers containing the first material.

A thickness of each layer is preferably between 10 and 100 µm, more preferable between 20 and 70 µm.

The first material may contain aluminum oxide, spinel, yttrium aluminum garnet or a mixture of two or three of these materials. The term aluminum oxide refers to the material described by sum formula Al₂O₃. The term spinel refers to a material described by the sum formula MgAl₂O₄.The term yttrium aluminum garnet (known as "YAG") refers to the material Y₃Al₂[AlO₄]₃, described by sum formula Y₃Al₅O₁₂.

The term zirconium dioxide, which is the main constituent of the stabilized second material, refers to ZrO₂. The term hafnium dioxide refers to HfO₂.

In the alternative to a multilayered substrate, the substrate may have a grain structure formed by a mixture of grains made from the first material and grains made from the stabilized second material.

The ratio of the grains with both materials may be adjusted in order to define the CTE of the substrate.

The substrate may preferably be produced by tape casting. Hence, a material is brought onto a carrier and a knife is moved along the material, bringing the material for the substrate into shape. If the substrate is made from a grain structure, a material containing a mixture with grains of both materials is used and shaped as a single layer. If a multilayered substrate is needed, the first material and the stabilized second material are tape casted one over the other in repeated cycles.

The resistance temperature sensor element according to the invention may be part of a resistance thermometer.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig.1: shows a preferred embodiment of a sensor assembly according to the invention in a cross-sectional view;
- Fig. 2: shows a resistance temperature sensor element comprising a sensor assembly according to the invention in a similar view as in Fig.1; and
- Fig. 3: shows a second preferred embodiment of a sensor assembly according to the invention in a cross-sectional view.

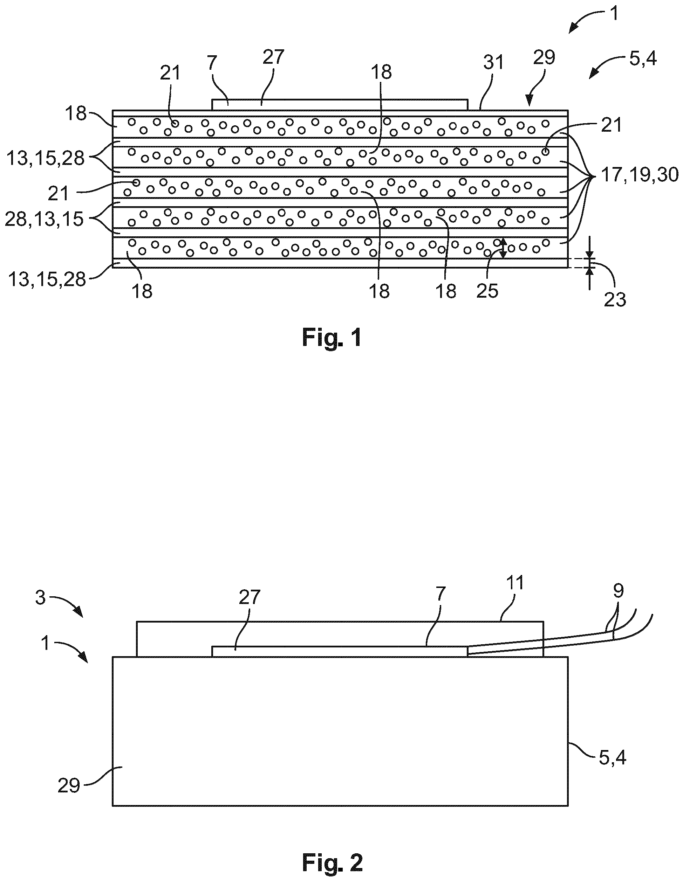

A sensor assembly 1 according to a preferred embodiment is shown in Fig. 1. The sensor assembly 1 can be used for a resistance temperature sensor element 3, which is shown in Fig. 2.

The sensor assembly 1 comprises a substrate 4 and a measuring structure 7 disposed on the substrate 4.

The substrate 4 of the first embodiment is a multilayered substrate 5, consisting of a plurality of layers.

The resistance temperature sensor element 3 may further comprise additional elements, of which only some are exemplarily shown in Fig. 2. The resistance temperature sensor element 3 may, in addition to the assembly 1, be provided with lead wires 9 that electrically connect the measuring structure 7.

In addition, the resistance temperature sensor element 3 may comprise a cover layer 11, which covers at least the measuring structure 7. The cover layer 11 may also cover at least parts of the lead wires 9. The cover layer 11 may be made from one or multiple glass materials.

In the following, the multilayered substrate 5 is described. The multilayered substrate 5 comprises at least one layer 13 that is predominantly made from a first material 15. The first material 15 is at least one of aluminum oxide and yttrium aluminum garnet. The first material 15 may, hence, also be a mixture of both materials.

The multilayered substrate 5 also comprises at least one layer 17, which is predominantly made from a stabilized second material 19. The stabilized second material 19 may comprise at least one of zirconium dioxide and hafnium dioxide.

In order to form the stabilized second material 19, at least one stabilizing material 21 is added to a raw second material 18. The raw second material 18 is preferably at least one of zirconium dioxide and hafnium dioxide. Due to the addition of the stabilizing material 21 to the second material 18, the stabilized second material 19 is formed.

The stabilized second material 19 may have a stabilized crystal structure, in particular in a desired temperature range. The stabilizing material 21 is indicated by circles in Fig. 1. These circles shall only show that the stabilizing material 21 is dissolved in the raw second material 18 but does not indicate any structure.

The stabilizing material 21 is preferably an oxide of an element having a valence different from 4, in particular 3 or 5. For the raw second material 18, the valence is four.

The layers 13 and 17 are disposed one over another, preferably in an alternating manner.

The stabilizing material 21 is preferably an oxide of yttrium, cerium or niobium.

The stabilizing material 21 preferably stabilizes a tetragonal and/or cubic crystal structure in the stabilized second material 19. In particular, the stabilizing material 21 stabilizes a tetragonal and/or cubic crystal structure of the zirconium dioxide and/or the hafnium dioxide.

A total number of layers 13 and 17 is preferably between 5 and 25 layers. Of course, the multilayered substrate 5 may also contain less than 5 or more than 25 layers.

The layers 13 and 17 may have different thicknesses. Preferably, a thickness 23 of the layers 13 is smaller than a thickness 25 of the layers 17.

Preferably, all layers 13 containing the first material 15 each have the same thickness 23, and the layers 17 containing the stabilized second material 19 are each of the same thickness 25, respectively. However, this is not mandatory.

Not all layers 13 containing the first material 15 must have the same thickness 23. As well, the layers 17 containing the stabilized second material 19 must not all have the same thickness 25.

In a preferred embodiment, the thicknesses 23 and 25 are between 30 and 80 µm.

The measuring structure 7 has a coefficient of thermal expansion (CTE) 27. The multilayered substrate 5 has a CTE 29. The coefficients of thermal expansion (CTEs) 27 and 29 are matched such that they differ about less than 5% from each other.

The measuring structure 7 is preferably made from platinum. The CTE of platinum is 9.5 ppm/K. Hence, the CTE 29 of the substrate 4, here the multilayered substrate 5, preferably deviates not more than 5% from the CTE of platinum and is preferably between 9.025 and 9.975 ppm/K.

More preferably, the CTE of the substrate 4 / multilayered substrate 5 deviates less than 2.5% from the CTE of the measuring structure 7.

The CTE 29 of the substrate 4 / multilayered substrate 5 is adjusted by the numbers and thicknesses 23 and 25 of the layers 13 and 17. The materials 15 and 19 forming the layers 13 and 17 both have different CTEs.

Preferably, the CTE 28 of the first material 15 is about 7.8 ppm/K, whereas the CTE 30 of the stabilized second material 19 is about 10.5 ppm/K.

Depending on the numbers and thicknesses 23 and 25 of the layers 13 and 17, an overall CTE about that of platinum, namely 9.5 ppm/K, can be achieved.

This good matching is achieved due to the fact that the stabilizing material 21 in the stabilized second material 19 stabilizes the crystal structure of this material such that the CTE of the stabilized second material 19 is around 10.5 ppm/K in all crystal directions and over the desired temperature range.

Just by way of example, the sum of thicknesses 25 of the layers 17 may be around 150% of a sum of the thicknesses 23 of the layers 13.

Since the stabilizing material 21 in the stabilized second material 19 may lead to a conductive multilayered substrate 5, an additional insulating layer 31 may be present between the measuring structure 7 and the remaining layers 13 and 17 of the multilayered substrate 5.

The insulating layer 31 electrically insulates the measuring structure 7 from electrically conductive layers of the remaining substrate 4 / multilayered Substrate 5. The insulating layer 31 preferably contains aluminum oxide (Al₂O₃), spinel (MgAl₂O₄) or magnesium titanate (MgTiO₃) or a mixture of two or three of these materials. The material for the insulating layer 31 is not limited to previous examples.

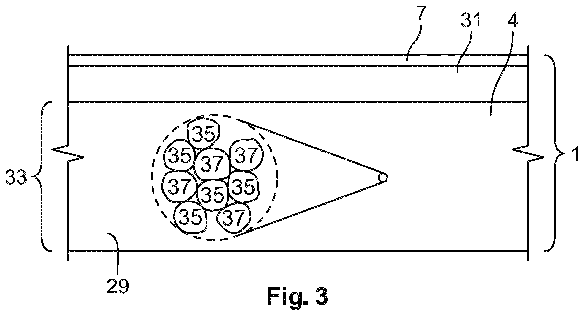

Fig. 3 shows another preferred embodiment of the invention. For the sake of brevity, only the difference to the first embodiment is described in detail.

Here, the substrate 4 is not a multilayered substrate 5, but contains a grain structure 33. The grain structure 33 contains grains 35 predominantly made from the first material 15 and grains 37 predominantly made from the stabilized second material 19. However, it is not excluded that the substrate 4 contains additional materials.

In Fig. 3, only some grains 35 and 37 are schematically indicated for explanatory reasons. The indicated grains are not representative for any size or shape or quantitative distribution.

The CTE 29 of the substrate 4 may be defined by adjusting the ratio of grains 35 and grains 37.

Just as the assembly of the first embodiment, an additional insulating layer 31 is present between the substrate 4 and the measuring structure 7.

### Reference numerals

- 1: Sensor assembly
- 3: Resistance temperature sensor element
- 4: Substrate
- 5: Multilayered substrate
- 7: Measuring structure
- 9: Lead wires
- 11: Cover layer
- 13: Layer containing the first material
- 15: First material
- 17: Layer containing the stabilized second material
- 18: Raw second material
- 19: Stabilized second material
- 21: Stabilizing material
- 23: Thickness of a layer containing the first material
- 25: Thickness of a layer containing the stabilized second material
- 27: Coefficient of thermal expansion of the measuring structure
- 28: Coefficient of thermal expansion of a layer containing the first material
- 29: Coefficient of thermal expansion of the substrate
- 30: Coefficient of thermal expansion of a layer containing the stabilized second material
- 31: Insulating layer
- 33: Grain structure
- 35: Grains containing the first material
- 37: Grains containing the stabilized second material

## Claims

1. Sensor assembly (1) for a resistance temperature sensor element (3), the sensor assembly (1) comprising a substrate (4) and a measuring structure (7) disposed on the substrate (4), wherein the substrate (4) comprises:
at least one first material (15), the first material (15) being at least one of aluminum oxide, spinel (magnesium aluminate) and yttrium-aluminum-garnet,
at least one stabilized second material (19), the stabilized second material (19) being at least one of stabilized zirconium dioxide and stabilized hafnium dioxide, the stabilized second material (19) being stabilized by containing an oxide of an element having a valence different from four,
wherein a coefficient of thermal expansion (29) of the substrate (4) deviates by less than 5 % from a coefficient of thermal expansion (27) of the measuring structure (7)
**characterized in that** the stabilized second material is stabilized by containing an oxide of an element with valence three or five.

2. Sensor assembly (1) according to claim 1, wherein the stabilized second material (19) is stabilized by containing an oxide at least one of the following elements: yttrium, cerium, niobium and tantalum.

3. Sensor assembly (1) according to any one of claims 1 to 2, wherein the stabilized second material (19) has a basically tetragonal or cubic crystal structure.

4. Sensor assembly (1) according to any one of claims 1 to 3, wherein the substrate (4) further comprises an insulating layer (31) between the measuring structure (7) and the remaining substrate (4).

5. Sensor assembly (1) according to claim 4, wherein the insulating layer (31) predominantly contains at least one of aluminum oxide, spinel (magnesium aluminate), or magnesium titanate.

6. Sensor assembly (1) according to any one of claims 1 to 5, wherein the measuring structure (7) is basically made from at least one of: platinum, a platinum alloy, nickel, a nickel alloy, iridium, an iridium alloy.

7. Sensor assembly (1) according to any one of claims 1 to 6, wherein the substrate (4) has a grain structure formed by a mixture of grains (35) made from the first material (15) and grains (37) made from the stabilized second material (19).

8. Sensor assembly (1) according to any one of claims 1 to 6, wherein the substrate (4) is a multilayered substrate (5) made from a plurality of layers (13, 17), at least one layer (13) predominantly containing the first material (15) and at least one layer (17) predominantly containing the stabilized second material (19), wherein the at least one layer (13) predominantly containing the first material (15) and the at least one layer (17) predominantly containing the stabilized second material (17) are disposed one over another, and wherein the coefficient of thermal expansion (29) of the plurality of layers (13, 17) deviates by less than 5 % from the coefficient of thermal expansion (27) of the measuring structure (7).

9. Sensor assembly (1) according to claim 8, wherein a coefficient of thermal expansion (28) of the layer (13) predominantly containing the first material (15) is different from a coefficient of thermal expansion (30) of the layer (17) predominantly containing the stabilized second material (19), and wherein the coefficient of thermal expansion (29) of the plurality of layers (13, 17) is adjusted by the numbers and thicknesses (23, 25) of the layers (13, 17).

10. Sensor assembly (1) according to claim 8 or 9, wherein the layers (13) predominantly containing the first material (15) and the layers (17) predominantly containing the stabilized second material (19) are disposed in an alternating manner.

11. Sensor assembly (1) according to any one of claims 8 to 10, wherein a total number of the layers (13) predominantly containing the first material (15) and the layers (17) predominantly containing the stabilized second material (19) is between 5 and 25 layers.

12. Sensor assembly (1) according to any one of claims 8 to 11, wherein a sum of thicknesses (25) of the layers (17) predominantly containing the stabilized second material (19) is approximately 150% of a sum of thicknesses (23) of the layers (13) predominantly containing the first material (15).

13. Sensor assembly (1) according to any one of claims 8 to 12, wherein a thickness (23, 25) of each of the layers (13) predominantly containing the first material (15) and each of the layers (17) predominantly containing the stabilized second material (19) is between 10 µm and 100 µm.

14. Resistance temperature sensor element (3) comprising a sensor assembly (1) according to any one of claims 1 to 13.

## Patentansprüche

1. Sensorbaugruppe (1) für ein Widerstandstemperatursensorelement (3), wobei die Sensorbaugruppe (1) ein Substrat (4) und eine auf dem Substrat (4) angeordnete Messstruktur (7) umfasst, wobei das Substrat (4) umfasst:
mindestens ein erstes Material (15), wobei das erste Material (15) mindestens eines von Aluminiumoxid, Spinell (Magnesiumaluminat) und Yttrium-Aluminium-Granat ist,
mindestens ein stabilisiertes zweites Material (19), wobei das stabilisierte zweite Material (19) mindestens eines von stabilisiertem Zirkoniumdioxid und stabilisiertem Hafniumdioxid ist, wobei das stabilisierte zweite Material (19) dadurch stabilisiert ist, dass es ein Oxid eines Elements mit einer Wertigkeit, die nicht vier beträgt, enthält,
wobei ein Wärmeausdehnungskoeffizient (29) des Substrats (4) um weniger als 5 % von einem Wärmeausdehnungskoeffizienten (27) der Messstruktur (7) abweicht, **dadurch gekennzeichnet, dass** das stabilisierte zweite Material dadurch, dass es ein Oxid eines Elements mit einer Wertigkeit von drei oder fünf enthält, stabilisiert ist.

2. Sensoranordnung (1) gemäß Anspruch 1, wobei das stabilisierte zweite Material (19) durch ein Oxid von mindestens einem der folgenden Elemente stabilisiert ist: Yttrium, Cer, Niob und Tantal.

3. Sensoranordnung (1) gemäß einem der Ansprüche 1 bis 2, wobei das stabilisierte zweite Material (19) eine im Wesentlichen tetragonale oder kubische Kristallstruktur aufweist.

4. Sensoranordnung (1) gemäß einem der Ansprüche 1 bis 3, wobei das Substrat (4) ferner eine Isolierschicht (31) zwischen der Messstruktur (7) und dem verbleibenden Substrat (4) umfasst.

5. Sensoranordnung (1) gemäß Anspruch 4, wobei die Isolierschicht (31) überwiegend mindestens eines von Aluminiumoxid, Spinell (Magnesiumaluminat) oder Magnesiumtitanat enthält.

6. Sensoranordnung (1) gemäß einem der Ansprüche 1 bis 5, wobei die Messstruktur (7) im Wesentlichen aus mindestens einem von: Platin, einer Platinlegierung, Nickel, einer Nickellegierung, Iridium, einer Iridiumlegierung hergestellt ist.

7. Sensoranordnung (1) gemäß einem der Ansprüche 1 bis 6, wobei das Substrat (4) eine Kornstruktur aufweist, welche durch ein Gemisch aus Körnern (35), die aus dem ersten Material (15) hergestellt sind, und aus Körnern (37), die aus dem stabilisierten zweiten Material (19) hergestellt sind, gebildet ist.

8. Sensoranordnung (1) gemäß einem der Ansprüche 1 bis 6, wobei das Substrat (4) ein mehrschichtiges Substrat (5) ist, das aus einer Vielzahl von Schichten (13, 17) hergestellt ist, wobei mindestens eine Schicht (13) überwiegend das erste Material (15) enthält und mindestens eine Schicht (17) überwiegend das stabilisierte zweite Material (19) enthält, wobei die mindestens eine Schicht (13), die überwiegend das erste Material (15) enthält, und die mindestens eine Schicht (17), die überwiegend das stabilisierte zweite Material (17) enthält, übereinander angeordnet sind, und wobei der Wärmeausdehnungskoeffizient (29) der Vielzahl von Schichten (13, 17) um weniger als 5 % von dem Wärmeausdehnungskoeffizienten (27) der Messstruktur (7) abweicht.

9. Sensoranordnung (1) gemäß Anspruch 8, wobei sich ein Wärmeausdehnungskoeffizient (28) der überwiegend das erste Material (15) enthaltenden Schicht (13) von einem Wärmeausdehnungskoeffizienten (30) der überwiegend das stabilisierte zweite Material (19) enthaltenden Schicht (17) unterscheidet und wobei der Wärmeausdehnungskoeffizient (29) der Vielzahl von Schichten (13, 17) durch die Anzahl und die Dicke (23, 25) der Schichten (13, 17) eingestellt wird.

10. Sensoranordnung (1) gemäß Anspruch 8 oder 9, wobei die Schichten (13), die überwiegend das erste Material (15) enthalten, und die Schichten (17), die überwiegend das stabilisierte zweite Material (19) enthalten, abwechselnd angeordnet sind.

11. Sensoranordnung (1) gemäß einem der Ansprüche 8 bis 10, wobei die Gesamtzahl der Schichten (13), die überwiegend das erste Material (15) enthalten, und der Schichten (17), die überwiegend das stabilisierte zweite Material (19) enthalten, zwischen 5 und 25 Schichten beträgt.

12. Sensoranordnung (1) gemäß einem der Ansprüche 8 bis 11, wobei eine Summe der Dicken (25) der Schichten (17), die überwiegend das stabilisierte zweite Material (19) enthalten, ungefähr 150 % einer Summe der Dicken (23) der Schichten (13), die überwiegend das erste Material (15) enthalten, beträgt.

13. Sensoranordnung (1) gemäß einem der Ansprüche 8 bis 12, wobei eine Dicke (23, 25) jeder der Schichten (13), die überwiegend das erste Material (15) enthalten, und jeder der Schichten (17), die überwiegend das stabilisierte zweite Material (19) enthalten, zwischen 10 µm und 100 µm beträgt.

14. Widerstandstemperatursensorelement (3), umfassend eine Sensoranordnung (1) gemäß einem der Ansprüche 1 bis 13.

## Revendications

1. Ensemble de capteur (1) pour un élément de capteur de température de résistance (3), l'ensemble de capteur (1) comprenant un substrat (4) et une structure de mesure (7) disposée sur le substrat (4), dans lequel le substrat (4) comprend :
au moins un premier matériau (15), le premier matériau (15) étant au moins un d'oxyde d'aluminium, de spinelle (aluminate de magnésium) et de grenat d'yttrium aluminium,
au moins un deuxième matériau stabilisé (19), le deuxième matériau stabilisé (19) étant au moins un de dioxyde de zirconium stabilisé et de dioxyde de hafnium stabilisé, le deuxième matériau stabilisé (19) étant stabilisé en refermant un oxyde d'un élément présentant une valence différente de quatre,
dans lequel un coefficient d'expansion thermique (29) du substrat (4) dévie de moins de 5 % d'un coefficient d'expansion thermique (27) de la structure de mesure (7)
**caractérisé en ce que** le deuxième matériau stabilisé est stabilisé en renfermant un oxyde d'un élément d'une valence de trois ou cinq.

2. Ensemble de capteur (1) selon la revendication 1, dans lequel le deuxième matériau stabilisé (19) est stabilisé en renfermant un oxyde d'au moins un des éléments suivants : yttrium, cérium, niobium et tantale.

3. Ensemble de capteur (1) selon l'une quelconque des revendications 1 et 2, dans lequel le deuxième matériel stabilisé (19) présente une structure essentiellement tétragonale ou cristalline cubique.

4. Ensemble de capteur (1) selon l'une quelconque des revendications 1 à 3, dans lequel le substrat (4) comprend en outre une couche isolante (31) entre la structure de mesure (7) et le substrat restant (4).

5. Ensemble de capteur (1) selon la revendication 4, dans lequel la couche isolante (31) contient de manière prédominante au moins un d'oxyde d'aluminium, de spinelle (aluminate de magnésium) ou de titanate de magnésium.

6. Ensemble de capteur (1) selon l'une quelconque des revendications 1 à 5, dans lequel la structure de mesure (7) est essentiellement constituée d'au moins un de : platine, un alliage de platine, nickel, un alliage de nickel, iridium, un alliage d'iridium.

7. Ensemble de capteur (1) selon l'une quelconque des revendications 1 à 6, dans lequel le substrat (4) présente une structure granuleuse constituée d'un mélange de grains (35) faits du premier matériau (15) et de grains (37) faits du deuxième matériau stabilisé (19) .

8. Ensemble de capteur (1) selon l'une quelconque des revendications 1 à 6, dans lequel le substrat (4) est un substrat multicouche (5) constitué d'une pluralité de couches (13, 17), au moins une couche (13) contenant de manière prédominante le premier matériau (15) et au moins une couche (17) contenant de manière prédominante le deuxième matériau stabilisé (19), dans lequel l'au moins une couche (13) contenant de manière prédominante le premier matériau (15) et l'au moins une couche (17) contenant de manière prédominante le deuxième matériau stabilisé (17) sont disposées l'une sur l'autre, et dans lequel le coefficient d'expansion thermique (29) de la pluralité de couches (13, 17) dévie de moins de 5 % du coefficient d'expansion thermique (27) de la structure de mesure (7).

9. Ensemble de capteur (1) selon la revendication 8, dans lequel un coefficient d'expansion thermique (28) de la couche (13) contenant de manière prédominante le premier matériau (15) est différent d'un coefficient d'expansion thermique (30) de la couche (17) contenant de manière prédominante le deuxième matériau stabilisé (19), et dans lequel le coefficient d'expansion thermique (29) de la pluralité de couches (13, 17) est ajusté par les nombres et les épaisseurs (23, 25) des couches (13, 17).

10. Ensemble de capteur (1) selon la revendication 8 ou 9, dans lequel les couches (13) contenant de manière prédominante le premier matériau (15) et les couches (17) contenant de manière prédominante le deuxième matériau stabilisé (19) sont disposées de manière alternée.

11. Ensemble de capteur (1) selon l'une quelconque des revendications 8 à 10, dans lequel un nombre total des couches (13) contenant de manière prédominante le premier matériau (15) et des couches (17) contenant de manière prédominante le deuxième matériau stabilisé (19) se situe entre 5 et 25 couches.

12. Ensemble de capteur (1) selon l'une quelconque des revendications 8 à 11, dans lequel une somme d'épaisseurs (25) des couches (17) contenant de manière prédominante le deuxième matériau stabilisé (19) est approximativement 150 % d'une somme d'épaisseurs (23) des couches (13)contenant de manière prédominante le premier matériau (15).

13. Ensemble de capteur (1) selon l'une quelconque des revendications 8 à 12, dans lequel une épaisseur (23, 25) de chacune des couches (13) contenant de manière prédominante le premier matériau (15) et de chacune des couches (17) contenant de manière prédominante le deuxième matériau stabilisé (19) se situe entre 10 µm et 100 µm.

14. Élément de capteur de température de résistance (3) comprenant un ensemble de capteur (1) selon l'une quelconque des revendications 1 à 13.
